# EUROPEAN PATENT SPECIFICATION

(11) **EP 0 980 732 B1**
(45) Date of publication and mention of the grant of the patent: **12.03.2008**
(21) Application number: 99202184.0
(22) Date of filing: 06.07.1999
(51) Int. Cl.: B23B 39/16

(54) **Method and apparatus for drilling holes in the shell of a cylinder**
Methode und Gerät zum Bohren von Löchern in eine Zylinderwand
Méthode et appareil de forage de trous dans la paroi d' un cylindre

(30) Priority: 13.07.1998 FI 981598
(43) Date of publication of application: 23.02.2000
(73) Proprietor: Voith Patent GmbH, 89522 Heidenheim (DE)
(72) Inventor: Vesterlund, Ingmar, 86100 Pyhäjoki (FI); Kugler, Georg, 89522 Heidenheim (DE); Oechsle, Markus, 73566 Bartholomä (DE); Kahl, Peter, 89547 Gerstetten (DE)
(74) Representative: Järveläinen, Pertti Tauno Juhani

(56) References cited:
- EP-A- 0 448 947
- FR-A- 2 655 896
- US-A- 4 674 925

## Description

The present invention relates to a method for drilling holes in the shell of a paper machine cylinder, according to the preamble of claim 1.

The invention also concerns an apparatus for drilling holes in the shell of paper machine cylinder, according to the preamble of claim 2.

In the art are known several types of equipment designed for drilling holes in the shell of a cylinder in a paper machine. Some prior-art embodiments are disclosed in patent publications EP-B-0448947 and EP-B-0545879, EP-B-0448947 describes a method and an apparatus for on-site drilling of perforating holes in the shell of a cylinder, particularly a dryer cylinder, in a paper machine with the cylinder being unremoved from the paper machine. Said apparatus comprises a spindle box equipped with a plurality of spindle heads adapted driven by a drive motor. The spindle box houses the drive motor which is arranged to move the spindle box with regard to the framework of the drilling apparatus when the drills are actuated toward the cylinder surface to be machined. Furthermore, said apparatus includes a drilling jig adapted to support and tension the framework of said drilling apparatus between the guideways and the shell of the cylinder to be machined. Further, the apparatus includes slide bushings arranged to guide the framework of the drilling apparatus along the guideway assembly when the apparatus is being moved into the next drilling position in the direction of the cylinder axis. The design of the apparatus uses guideways supported on the cylinder next to that being machined. EP-B-0545879 describes a further development of the above-outlined apparatus, whereby each spindle head is provided with a separate slide frame adapted individually movable in the lateral direction. These prior-art apparatuses are hampered, among other drawbacks, by their complicated construction which results in a limited range of spindle head movement, for instance. Furthermore, the system needs the use of a drilling jig, whereby each different drilling pattern requires an individual drilling jig.

FR-A-0448947 relates to a variable-configuration multi-spindle machining head, whereby the head, which can be fitted to a machine tool, translates a drive movement to a plurality of tool spindles each one mounted on a spindle housing, possibly associated with a relay housing and adjustable in terms of angular position about a mounting axis. At the base of a drum surrounding the housings a setting disk is mounted so that it can rotate about the overall axis of the head, and including grooves each of which is traversed by a hub of a spindle housing located on the movement output side. Thus, the rotation of the setting disk makes it possible synchronously to modify the distances between all the tools and the overall axis of the head.

It is an object of the present invention to provide such an entirely novel type of method and apparatus for drilling the shell of a cylinder that is capable of overcoming drawbacks of the prior-art techniques.

A method and an apparatus for drilling holes in the shell of a paper machine cylinder, according to the present invention are set forth in claim 1 and respectively in claim 2.

The method and apparatus according to the invention offer a number of significant benefits. The use of multispindle drilling modules and the positioning technique of drilling modules by means of having the drilling modules made rotatable about their intermediate shafts can provide an extremely wide latitude in the position control of the drilling modules. The position control possibilities may be extended further by using drilling modules adapted rotatable about the central drive shaft of the module. The present construction facilitates drilling without drilling jigs.

In the context of the present invention, the term paper machine is used when reference is made to machines used in making a material web including a paper machine, a board machine or a cellulosic web dryer. The term cylinder is used when reference is made generally to cylindrical objects such as rolls, dryer cylinders and the like.

In the following, the invention will be described in greater detail with the help of an exemplifying embodiment by making reference to the appended drawings in which
Figure 1 shows schematically an apparatus according to the invention installed on site into its operating position;
Figure 2 shows a view of the apparatus according to the invention in direction A marked in Fig. 1;
Figure 3 shows a view of the apparatus according to the invention in direction B marked in Fig. 1;
Figures 4A-4C show a drilling module in the apparatus according to the invention;
Figure 5 shows a partially sectional view of a multispindle drilling module in the apparatus according to the invention; and
Figures 6A - 6C show schematically the position control arrangement of drills for one drilling module as seen from the direction of the cylinder being machined.

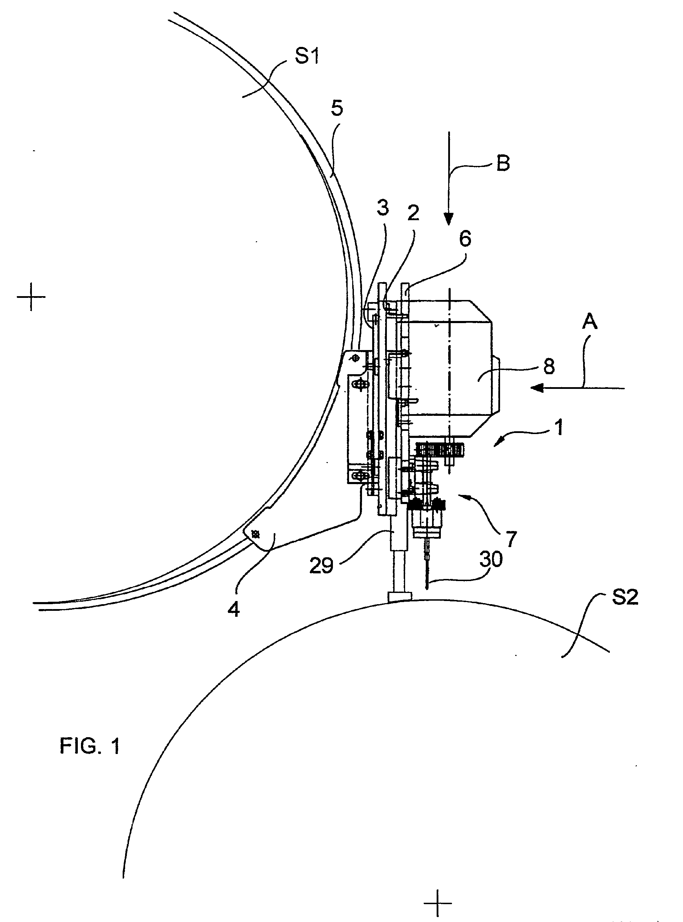

With reference to Fig. 1, therein is shown a preferred embodiment of the apparatus 1 according to the invention in its operating position supported on the structures of a paper machine such as a first cylinder s1 of the paper machine. The cylinder s2 to be drilled is situated laterally offset below the first cylinder s1. The apparatus 1 includes a framework 2 with a construction supportable on the structures of the paper machine. The framework 2 is supported on the first cylinder s1 by means of support members 3, 4 such as curved plates 4 resting on the shell of the cylinder. The curved plates are further connected to the framework 2. Advantageously, the apparatus is anchored by means of fastening belts 5 to the surface of the first cylinder s1. Thus, the framework 2 will be aligned essentially parallel to the axis of the cylinder s1 at least over a portion of the cylinder width.

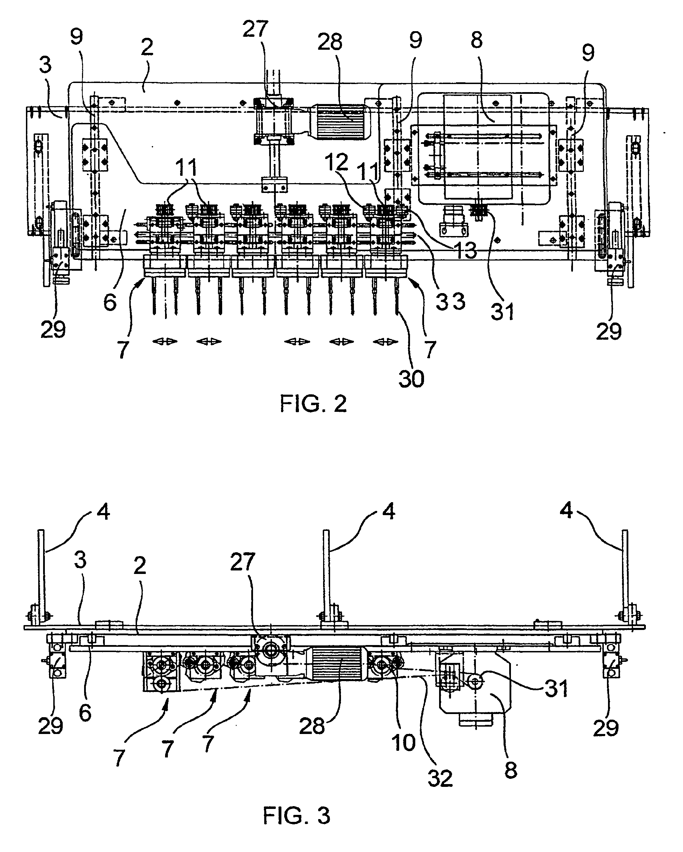

The apparatus 1 includes a feed frame 6 which, supported by the framework 2, is adapted to be movable toward the surface of the cylinder s2 to be machined, said feed frame comprising a plurality of drilling modules 7 adapted to be driven by means of a drive unit 8. On the framework 2 are adapted guideways 9 along which the feed frame 6 can be moved in order to provide the feed movement of the drilling modules 7 as well as the withdrawal movement thereof outward from the cylinder surface after the completion of the drilling step. The drilling modules 7 include at least two spindle heads. The embodiment illustrated in Fig. 2 has six two-spindle drilling modules 7 adapted for simultaneous drive by means of a drive unit 8.

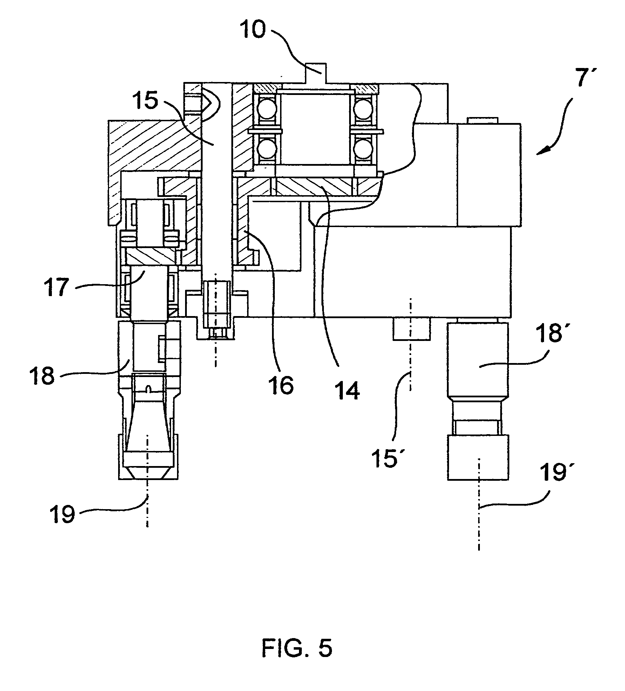

Each drilling module 7 has a central drive shaft which in the embodiment illustrated in the diagrams is belt-driven. The belt drive train is accomplished by providing the drive shaft 10 with a belt drive pulley 11 and the drilling module 7 with belt idler pulleys 12, 13. On the drive shaft 10, so as to rotate therewith, is mounted a first gear wheel 14 (cf. Fig. 5), which is adapted to drive a gear transmission 16 of an intermediate shaft 15 that further drives a spindle shaft 17. In the embodiment illustrated in the diagrams, each drilling module 7 includes two spindle heads 18, 18', driven in the above-described manner by the drive shaft 10 of the drilling module. At least one spindle head 18, 18' in each drilling module is arranged rotatable about an intermediate shaft 15, 15' of the drilling module arranged between the drive shaft 10 and the spindle head. Thus, the mutual distance of the spindle shaft centers 19, 19' from each other can be adjusted in each drilling module separately by means of rotating at least one spindle head 18, 18' in the drilling module about the intermediate shaft 15, 15' of the drilling module. Furthermore, the entire drilling module, or at least the spindle head housing the spindle shafts is arranged rotatable about the drive shaft 10, thus making it possible to control the drilling pattern produced by each drilling module 7. Resultingly, the spindle shaft centers 19, 19' of a two-spindle drilling module can be readily aligned on a desired line.

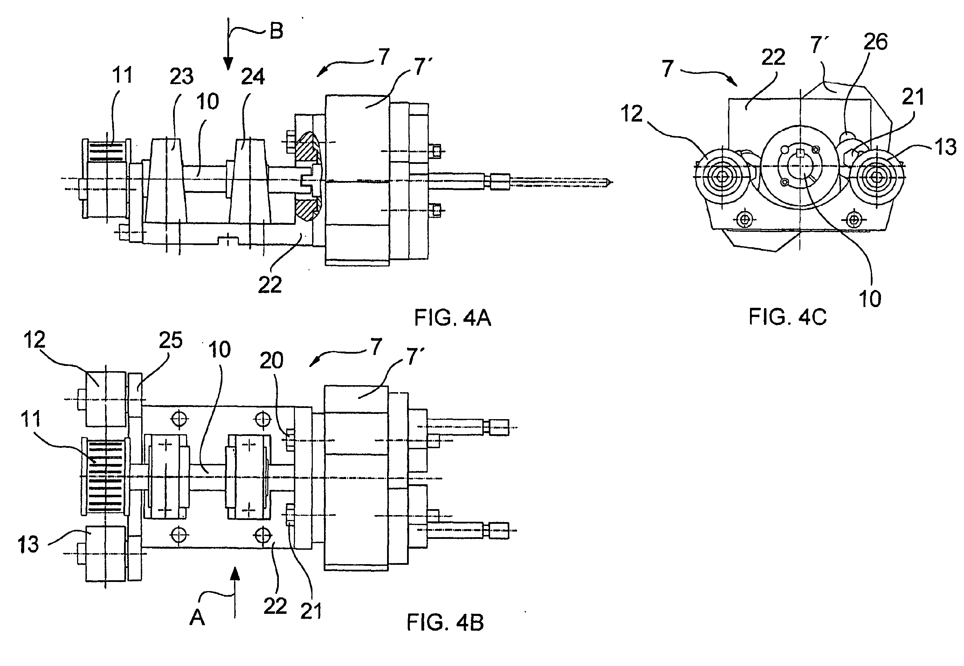

Each drilling module 7 has means 20, 21 for locking the drilling module into a desired position. The drilling module 7 includes a mounting plate 22 (cf. Fig. 4) of the spindle head 7', said mounting plate having arranged thereon the bearing assemblies 23, 24 of the drive shaft 10 as well as support elements 25 for mounting the belt idler pulleys 12, 13. The spindle head mounting plate 11 is provided with holes, slots or similar openings 26 for fixing the spindle head into a desired position by means of fasteners 20, 21 such as screws or bolts. The drilling modules 7 are mounted by their mounting plates 22 in a movable manner on a guideway 33 adapted on the feed frame 6. Resultingly, a still further facility of controlling the layout of the drilling pattern can be obtained by altering the position of the drilling modules 7 in the feed frame 6. In Fig. 2, such a position control possibility is indicated by arrows.

In Figs. 2 and 3 is shown schematically a drilling apparatus 1 according to the invention. The drilling apparatus is built on a framework 2. The framework 2 includes a mounting member 3 to which the curved backing plates 4 are connected. The framework consists of a body 2 including guideways for the movement of the feed frame 6, and an actuator assembly 27, 28 of the feed frame, capable of moving the feed frame 6 with respect to the drilling apparatus body 2. The actuator of the feed frame 6 comprises a conventional screw lift (jack) 27, driven by means of a drive motor 28. Into the feed frame 6 are adapted a number of parallel drilling modules 7, all driven by means of a common drive unit 8. The drive unit is mounted on the feed frame.

The framework, advantageously the body 2 thereof, is provided with support members 29, advantageously comprising pneumatic cylinders, which, prior to the machining operation, are driven against the surface of the cylinder s2 to be machined, whereby any possible play, that is, the instability in the bearings of the cylinder s1 and the support structures thereof acting as the mounting base of the drilling apparatus is minimized and the drilling operation itself becomes very stable. This arrangement prevents, for instance, unwanted movements of the drilling apparatus during the drilling operation, whereby the breaking of the drills 30 is eliminated.

The drilling operation takes place as follows. The drilling apparatus is first mounted on the cylinder s1 next closest to the cylinder s2 to be machined by means of fastening belts. The spindle heads of the drilling modules 7 are next adjusted into a desired position and the spindle head 7' of the drilling module is rotated with respect to the drive shaft 10 if so needed. Furthermore, the mutual distances between the drilling modules 7 are set as required to obtain the desired drilling pattern. The support members 29 are driven against the surface of the cylinder s2 to be machined. With the help of the actuator assembly 27, 28, the feed frame 6 is moved toward the cylinder to be machined. Finally, the rotary drive unit 8 of the spindle heads 30 is switched on. After the completion of the drilling step, these actions are repeated in a reverse order.

The cylinder s2 being machined is rotated between the drilling steps by means of a rotary drive system (not shown in the diagrams) about the cylinder shaft incrementally by a given angle into the next drilling position. One type of such a rotary drive system is described in patent publication EP-B-0448947. However, such a rotary drive system can rotate the cylinder only by increments determined by the pitch of the gear wheel mounted in the drive unit. Hence, each different size of incremental angle of rotation would need a separate gear wheel. To overcome this limitation, a conventional indexing wheel can be used to convert the increment angle of rotation into a suitable value. The cylinder being machined is locked into a fixed position for the duration of the machining step.

In Fig. 3 the rotational drive of the drilling modules is partially visible. The drive means 8, which advantageously is a conventional electric motor, transmits its power feed from the motor output shaft 31 via a belt transmission train 32 to the drive shafts 10 of the drilling modules 7, wherefrom the power feed is distributed individually to each of the spindle heads carrying the drills 30.

In Figs. 4A-4C is shown one of the drilling modules and in Fig. 5 one spindle head 7' of the drilling module. The spindle shaft centers 19, 19' are made rotatably adjustable about each of the intermediate shafts 15, 15', the number of which in the embodiment illustrated in the diagram is two.

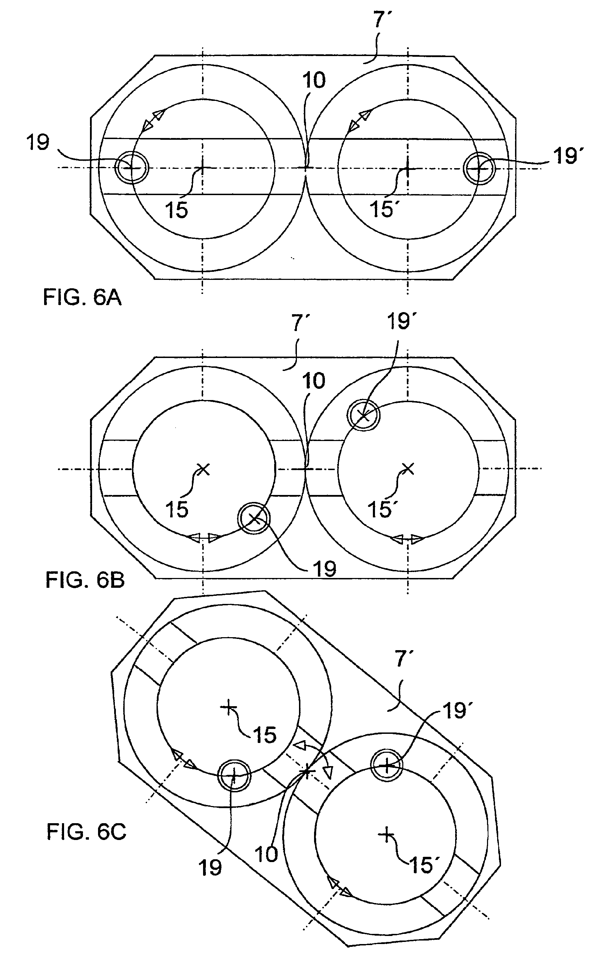

The position control of the drilling module is illustrated in schematic manner in Figs. 6A, 6B and 6C. In Fig. 6A the mutual distance between the spindle shaft centers 19, 19' of the two-spindle head 7' is shown driven into the maximally outdistanced position. However, the spindle head 7' of the drilling module has not been rotated about the drive shaft 10. In Fig. 6B both spindle shaft centers 19, 19' are shown rotated about the intermediate shaft 15, 15'. Then the mutual distance between the spindle shaft centers 19, 19' becomes smaller than in Fig. 6A, and additionally, the drills are offset at a distance from the centerline of drilling. When required, the drilling pattern may further be controlled by rotating the frame of the spindle head 7' about the center axis 10, whereby it is possible to bring the spindle shaft centers 19, 19' to the centerline of drilling, for instance.

To those versed in the art it is obvious that the invention is not limited by the embodiments described above, but rather, can be varied within the scope of the appended claims.

## Claims

1. A method for drilling holes in the shell of a paper machine cylinder, with said cylinder being unremoved from its operating position in a paper machine, in which method is utilized a multispindle drilling apparatus (1) equipped with a facility of controlling the distance between the drill centers of the adjacent drilling modules (7), wherein the multispindle drilling apparatus uses drilling modules (7) of at least two spindle heads,
**characterized in**
**that** the mutual distance of the spindle shaft centers (19, 19') in each drilling module is adjusted by rotating at least one spindle head of at least one drilling module about an intermediate shaft (15, 15') arranged between a drive shaft (10) and the spindle head,
**that** the drilling pattern machined by means of the drilling module is additionally adjusted by rotating the body of the drilling module, or alternatively, the spindle head (7') of the drilling module about the central drive shaft (10) of the drilling module, and
**that** the drilling pattern is additionally adjusted by altering the mutual position of adjacent drilling modules (7) with respect to each other.

2. An apparatus for drilling holes in the shell of paper machine cylinder, said apparatus comprising a stationary framework adapted supportable on the structures of the paper machine and a feed frame adapted movable along said stationary framework radially toward the shell of said cylinder, said feed frame carrying a plurality of drilling modules adapted rotatable by means of a drive unit,
**characterized in**
**that** the drilling modules (7) include a drive shaft (10), at least two spindle heads and intermediate shafts (15, 15') arranged between the drive shaft (10) and the spindle heads, and that at least one spindle head (18, 18') in each drilling module is arranged rotatable about the intermediate shaft (15, 15') of the drilling module,
**that** the drilling module (7) or the spindle head (7') is arranged rotatable about the central drive shaft (10) of the module and includes means for locking said module or head into a desired position, and that the feed frame (6) of the apparatus includes a plurality of drilling modules having at least some of the modules arranged movable in the lateral direction.

## Patentansprüche

1. Verfahren zum Bohren von Bohrungen im Mantel eines Papiermaschinenzylinders, der sich in einer Papiermaschine in seiner Arbeitsposition befindet, wobei ein Mehrspindelbohrapparat (1) verwendet wird, ausgerüstet mit einer Einrichtung zum Überwachen des Abstandes zwischen den Bohrzentren der benachbarten Bohrmodule (7), wobei der Mehrspindelbohrapparat Bohrmodule (7) mit wenigstens zwei Spindelköpfen aufweist,
**dadurch gekennzeichnet, dass** der gegenseitige Abstand der Spindelwellenzentren (19, 19') bei jedem Bohrmodul durch Verdrehen wenigstens eines Spindelkopfes wenigstens eines Bohrmoduls um eine Zwischenwelle (15, 15') justiert wird, die zwischen einer Antriebswelle (10) und dem Spindelkopf angeordnet ist, dass das durch die Bohrmodule erzeugte Bohrmuster zusätzlich **dadurch** justiert wird, dass der Körper des Bohrmoduls, oder alternativ, der Spindelkopf (7') des Bohrmoduls um die zentrale Antriebswelle (10) des Bohrmoduls verdreht wird, und das Bohrmuster zusätzlich justiert wird durch Verändern der gegenseitigen Position von einander benachbarten Bohrmodulen (7) relativ zueinander.

2. Vorrichtung zum Bohren von Bohrungen im Mantel eines Papiermaschinenzylinders, umfassend einen stationären Rahmen, der auf den Strukturen der Papiermaschine getragen werden kann, und einen Zufuhrrahmen, der entlang des stationären Rahmens radial gegen den Mantel des Zylinders verschiebbar ist und der eine Mehrzahl von Bohrmodulen trägt, die mittels einer Antriebseinheit drehbar sind,
**dadurch gekennzeichnet, dass** die Bohrmodule (7) eine Antriebswelle (10) umfassen, wenigstens zwei Spindelköpfe sowie zwischen der Antriebswelle (10) und den Spindelköpfen angeordnete Zwischenwellen (15, 15') und dass wenigstens ein Spindelkopf (18, 18') in jedem Bohrmodul um die Zwischenwelle (15, 15') des Bohrmoduls drehbar ist, dass das Bohrmodul (7) oder der Spindelkopf (7') um die zentrale Antriebswelle (10) des Moduls drehbar ist und Mittel zum Verriegeln des Moduls oder des Kopfes in einer gewünschten Position aufweist, und dass der Zufuhrrahmen (6) der Vorrichtung eine Mehrzahl von Bohrmodulen aufweist, von denen wenigstens einige in Seitenrichtung verschiebbar sind.

## Revendications

1. Procédé de perçage de trous dans l'enveloppe d'un cylindre de machine à papier, ledit cylindre demeurant dans sa position de fonctionnement dans une machine à papier, dans lequel procédé est utilisé un appareil à percer multibroches (1) équipé d'un système de réglage de la distance entre les centres de perçage des modules de perçage adjacents (7), dans lequel l'appareil à percer multibroches utilise des modules de perçage (7) d'au moins deux têtes de broche,
**caractérisé en ce que** la distance mutuelle des centres d'arbre de broche (19, 19') dans chaque module de perçage est ajustée en mettant en rotation au moins une tête de broche d'au moins un module de perçage autour d'un arbre intermédiaire (15, 15') disposé entre un arbre d'entraînement (10) et la tête de broche,
**en ce que** le dessin de perçage réalisé au moyen du module de perçage est en outre ajusté en mettant en rotation le corps du module de perçage, ou en variante, la tête de broche (7') du module de perçage autour de l'arbre d'entraînement central (10) du module de perçage, et
**en ce que** le dessin de perçage est en outre ajusté en modifiant la position mutuelle des modules de perçage adjacents (7) les uns par rapport aux autres.

2. Appareil de perçage de trous dans l'enveloppe d'un cylindre de machine à papier, ledit appareil comprenant un châssis stationnaire adapté pour pouvoir être supporté sur les structures de la machine à papier et un cadre d'alimentation adapté pour pouvoir être déplacé le long dudit châssis stationnaire radialement vers l'enveloppe dudit cylindre, ledit cadre d'alimentation portant une pluralité de modules de perçage adaptés pour pouvoir être mis en rotation au moyen d'une unité d'entraînement,
**caractérisé en ce que** les modules de perçage (7) comprennent un arbre d'entraînement (10), au moins deux têtes de broche et des arbres intermédiaires (15, 15') disposés entre l'arbre d'entraînement (10) et les têtes de broche, et
**en ce qu'**au moins une tête de broche (18, 18') dans chaque module de perçage est disposée de façon à pouvoir être mise en rotation autour de l'arbre intermédiaire (15, 15') du module de perçage,
**en ce que** le module de perçage (7) ou la tête de broche (7') est disposé(e) de façon à pouvoir être mis(e) en rotation autour de l'arbre d'entraînement central (10) du module et comprend des moyens de blocage dudit module ou de ladite tête dans une position souhaitée, et
**en ce que** le cadre d'alimentation (6) de l'appareil comprend une pluralité de modules de perçage, au moins certains des modules étant disposés de façon à pouvoir être déplacés dans la direction latérale.
